# EUROPEAN PATENT APPLICATION

(11) **EP 4 641 391 A1**
(43) Date of publication of application: **29.10.2025**
(21) Application number: 23906308.4
(22) Date of filing: 23.05.2023
(51) Int. Cl.: G06F 11/14, G06F 9/455

(54) **DATA PROCESSING DEVICE, PROGRAM, AND COMPUTER READABLE STORAGE MEDIUM**

(30) Priority: 23.12.2022 JP 2022207104
(71) Applicant: Toshiba TEC Kabushiki Kaisha, Tokyo 141-8562 (JP)
(72) Inventor: ISHIDA, Takehisa, Tokyo 141-8562 (JP)
(74) Representative: Bandpay & Greuter
(86) International application number: PCT/JP2023/019142
(87) International publication number: WO 2024/134922

(57) **Abstract**

Enabling display effective for further improving a sales promotion effect on an information terminal. A data processing apparatus includes an acquisition unit, a storage unit, and an installation control unit. The acquisition unit acquires, when a microservice is to be installed, storage destination information indicating a storage destination in a first storage device, and the storage destination is used to store data generated by the microservice. The storage unit stores the storage destination information acquired by the acquisition unit. The installation control unit installs the microservice for which the storage destination information has been acquired.

## Description

### FIELD

Embodiments of the present invention relate to a data processing apparatus, a program for causing a computer to function as the data processing apparatus, and a computer-readable storage medium recording the program.

### BACKGROUND

In recent years, a container technology has been known as a virtualization technology.

A container is a mechanism that creates a virtual area on an operating system (OS) and executes and operates applications and their execution environments within the area. In addition, a microservice is provided as a set of applications in the container. From another application that is different from the microservice and is operating on the OS, it is not possible to directly access the microservice constituted by the applications in this container.

Since the applications in the container of the microservice store data in a virtual volume, that is, on a memory, when the container in the microservice is deleted, the stored data is also deleted. Therefore, a container management tool such as Docker (Trademark) or the like provides a data persistence function of storing data stored in a virtual volume in a container to a storage on hardware or an external storage. At this time, a destination for data persistence is set when the container management tool deploys (installs) the applications in the container, and this information is managed only by configuration at the time of deployment.

In addition, there is also a known operation mode in which a microservice is operated on an edge device, which is an on-premises data processing apparatus, to provide various services. When a microservice is operated on an on-premises edge device, a storage in the edge device is designated as a destination for data persistence. As described above, if the storage in the edge device is set as the destination for data persistence, there is a possibility that data in the destination for persistence will be lost due to a storage failure or the like of the edge device. Therefore, backing up of the data stored in the destination for persistence is required.

The destination for data persistence is designated when a microservice (container) is deployed. Therefore, a control application that controls the edge device cannot grasp the destination for persistence. Therefore, it is difficult for the control application to correctly back up data generated by the microservice and stored in the destination for persistence. In addition, even if all the data in a storage including the data in the destination for persistence is backed up to another storage, the control application does not know the data persistence destination for data in the container and cannot perform data recovery for the microservice from the backed-up data.

### CITATION LIST

### PATENT LITERATURE

Patent Literature 1: Jpn. Pat. Appln. KOKAI Publication No. 2022-91301

### SUMMARY

### TECHNICAL PROBLEM

A problem to be solved by an embodiment of the present invention is to provide a data processing apparatus and a program thereof capable of grasping a data persistence destination for data generated by a microservice.

### BRIEF DESCRIPTION OF THE DRAWINGS

FIG. 1 is an overall configuration diagram of a data processing system in an embodiment of the present invention.
FIG. 2 is a block diagram illustrating a circuit configuration of a main part of an edge device as an embodiment of a data processing apparatus.
FIG. 3 is a schematic diagram illustrating a main data structure of a microservice information table stored in a main memory in the edge device.
FIG. 4 is a schematic diagram illustrating a main software configuration in the edge device.
FIG. 5 is a flowchart illustrating a procedure of a main information process of a control module of the edge device.
FIG. 6 is a flowchart illustrating a procedure of a microservice deployment process.
FIG. 7 is a schematic diagram illustrating an example of a relationship between each software configuration and each storage in the edge device in the microservice deployment process.
FIG. 8 is a schematic diagram illustrating an example of content of a microservice package input to the edge device.
FIG. 9 is a flowchart illustrating a procedure of a backup process.
FIG. 10 is a schematic diagram illustrating an example of a relationship between each software configuration and each storage in the edge device in the backup process.
FIG. 11 is a flowchart illustrating a procedure of a recovery process.
FIG. 12 is a schematic diagram illustrating an example of a relationship between each software configuration and each storage in the edge device in the recovery process.

### DETAILED DESCRIPTION

In an embodiment, a data processing apparatus includes an acquisition unit, a storage unit, and an installation control unit. The acquisition unit acquires, when a microservice is to be installed, storage destination information indicating a storage destination in a first storage device, the storage destination being used to store data generated by the microservice. The storage unit stores the storage destination information acquired by the acquisition unit. The installation control unit installs the microservice for which the storage destination information has been acquired.

Hereinafter, an embodiment of a data processing apparatus will be described with reference to the drawings.

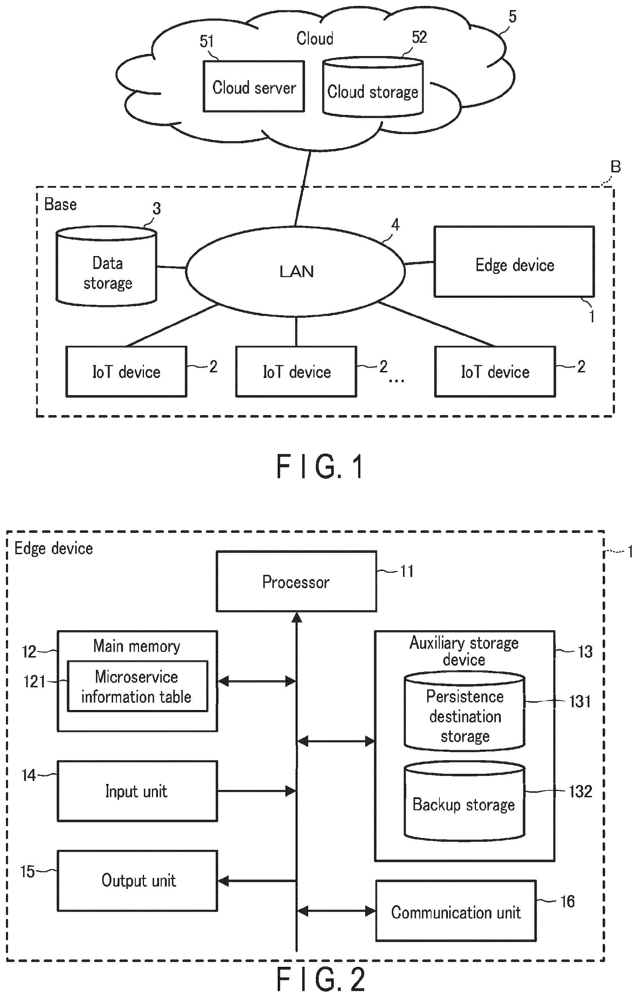

FIG. 1 is an overall configuration diagram of a data processing system in an embodiment of the present invention. A data processing apparatus according to an embodiment of the present invention is provided as an on-premises edge device 1 at a base B or the like. The edge device 1 is connected to a plurality of Internet of Things (IoT) devices 2 and a data storage 3 via a local area network (LAN) 4 in the base B. In addition, the edge device 1 is configured to be able to communicate with a cloud 5, and can download programs and data from a cloud server 51 and a cloud storage 52 on the cloud 5, and upload data to the cloud server 51 and the cloud storage 52. Note that, in FIG. 1, the edge device 1 is connected to the cloud 5 via the LAN 4, but it is needless to say that the edge device 1 may be configured to be directly connected to the cloud 5.

For example, if the base B is a factory, the IoT devices 2 can be sensors that detect the operation of machines in the factory, and the data storage 3 can accumulate data acquired by the IoT devices 2. In this case, the edge device 1 can analyze or process the data acquired by the IoT devices 2 and upload the data to the cloud server 51 or the cloud storage 52 operated by a head office, a data sales service company, or the like. In addition, if the base B is a store such as a supermarket, the IoT devices 2 can be point of sales (POS) terminals in the store, and the data storage 3 can store a product master or the like that describes codes, unit prices, and the like of products. In this case, the edge device 1 can calculate sales using the product codes acquired by the IoT devices 2 and the product master stored in the data storage 3, analyze or process the sales, and upload the sales to the cloud server 51 or the cloud storage 52 operated by a head office or the like.

FIG. 2 is a block diagram illustrating a circuit configuration of a main part of the edge device 1. The edge device 1 has a configuration in which a main memory 12, an auxiliary storage device 13, an input unit 14, an output unit 15, and a communication unit 16 are connected to a processor 11. The edge device 1 configures a computer by the processor 11, the main memory 12, and the auxiliary storage device 13.

The processor 11 corresponds to a central part of the computer. The processor 11 controls each unit to achieve various functions as the edge device 1 in accordance with an OS or an application program. The processor 11 is, for example, a central processing unit (CPU). The processor 11 may be a processing circuit, such as a graphics processing unit (GPU), an application specific integrated circuit (ASIC), a programmable logic device (for example, a simple programmable logic device (SPLD), a complex programmable logic device (CPLD), a field programmable gate array (FPGA)), or the like. The processor 11 is not limited to being configured as a single processing circuit, and may be configured as the processor 11 by combining a plurality of processing circuits.

The main memory 12 corresponds to a main storage part of the computer. The main memory 12 includes a nonvolatile memory area and a volatile memory area. The main memory 12 stores the OS, the application program, a microservice which is a containerized application program, and the like in the nonvolatile memory area. The main memory 12 can store data necessary for the processor 11 to perform processing for controlling each unit in the nonvolatile or volatile memory area. The main memory 12 uses a part of the nonvolatile memory area as a creation area for a microservice information table 121. The microservice information table 121 stores information regarding a microservice deployed (installed) in the main memory 12, and details thereof will be described later. In addition, the main memory 12 uses the volatile memory area as a work area in which data is appropriately rewritten by the processor. For example, the nonvolatile memory area is a read only memory (ROM). The volatile memory area is a random-access memory (RAM).

The auxiliary storage device 13 corresponds to an auxiliary storage part of the computer. For example, an electrically erasable programmable read-only memory (EEPROM) (registered trademark), a hard disk drive (HDD), a solid state drive (SSD), or the like is used as the auxiliary storage device 13. The auxiliary storage device 13 stores data used when the processor 11 performs various processes and data created by processing in the processor 11. The auxiliary storage device 13 can store the above application. In the auxiliary storage device 13, a persistence destination storage 131, a backup storage 132, and the like are configured. The persistence destination storage 131 is a first storage device that stores data generated by the microservice in order to make the data persistent. The backup storage 132 is a second storage device that copies and stores data stored in the persistence destination storage 131 for backup of the data. The persistence destination storage 131 and the backup storage 132 are configured in storage devices physically different from each other, for example, different physical drives. Alternatively, one can be configured in an SSD and the other can be configured in an HDD.

The input unit 14 is a user interface such as a keyboard, a touch panel, a pointing device such as a mouse, or the like. The input unit 14 may further include a reading device that reads a microservice package from a computer-readable storage medium such as a disk medium or a memory medium recording the microservice package to be used for microservice deployment described later. In addition, the output unit 15 is a user interface such as a display, or an output device such as a printer, or the like. Note that the edge device 1 may not include at least one of the input unit 14 and the output unit 15.

The communication unit 16 transmits and/or receives data to and from each unit connected via the LAN 4. In addition, the communication unit 16 communicates with the cloud 5 to download an application program, a microservice package, data, and the like from the cloud server 51 or the cloud storage 52, and upload data.

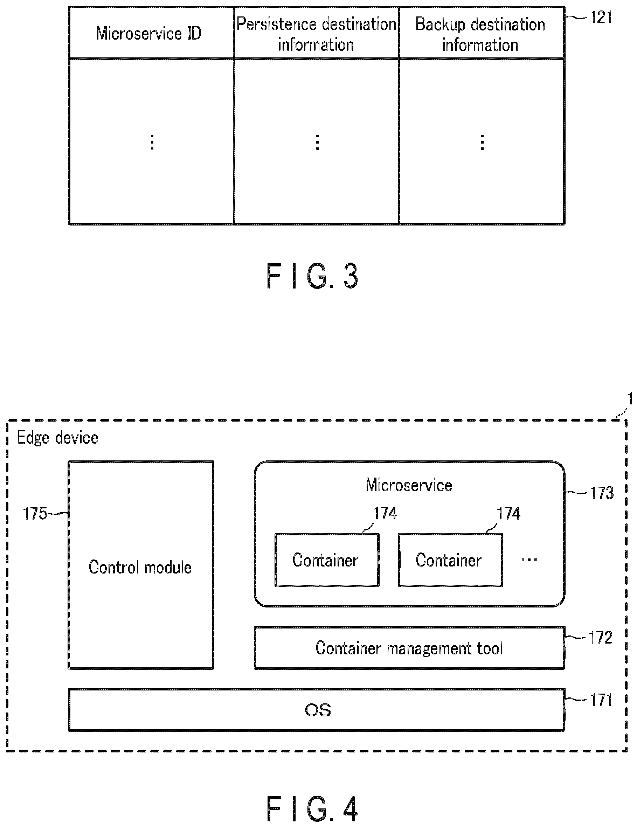

FIG. 3 is a schematic diagram illustrating a main data structure of the microservice information table 121 stored in the main memory 12. The microservice information table 121 stores a microservice ID, persistence destination information, and backup destination information for each microservice deployed in the edge device 1. The microservice ID is unique identification information for identifying a microservice. The persistence destination information is a data persistence destination path of the persistence destination storage 131 used to store data generated by the microservice. The backup destination information is a storage destination path of the backup storage 132 for backing up the data.

FIG. 4 is a schematic diagram illustrating a main software configuration in the edge device 1. In the present embodiment, each application is containerized by a container technology, and hardware resources are managed by a container management tool. The software configuration illustrated in FIG. 4 is implemented by the processor 11 executing a program stored in the main memory 12 of the edge device 1.

As illustrated in FIG. 4, an OS 171 is installed in the edge device 1. Furthermore, a container management tool 172 that operates on the OS 171 is installed in the edge device 1. The container management tool 172 includes a container engine that builds a container environment and executes an application in the container environment, such as Dcker, and an orchestration tool that manages hardware resources of the container environment, such as Kubernetes (Trademark) and k3s.

The container engine forms a logical container area by virtualizing the hardware resources and the like. Then, the application is integrally configured with middleware used for operation in the container environment and a part of the OS (libraries, settings, file systems, or the like). As a result, the containerized application operates in the container area. Note that the OS configured in the container can be of a type different from the OS 171 of the edge device. Such an integrated configuration of the application, the middleware, and a part of the OS can be referred to as containerization, and the containerized application can be simply referred to as a container. As described above, the container environment is built by introducing the container engine, and the container can be executed in the container environment by containerizing the application.

The orchestration tool manages the hardware resources virtualized by the container engine. Specifically, the orchestration tool builds a logical area called a cluster as an environment in which the containerized application is executed. In the cluster, one or more nodes that are execution environments for the application are provided. In the nodes, one or more containers are managed in units called pods. A pod is constituted by one or more containers 174. When an application is developed using containers, a method called microservices is generally used, in which the application is subdivided and implemented by function. Using an orchestration tool, microservices are distributed and arranged in each pod.

Therefore, in the environment in which the container management tool 172 is introduced as described above, a microservice 173 is managed as a set of one or more containers 174 as illustrated in FIG. 4. The containerized applications are managed in units of pods. Each time the microservice 173 terminates a predetermined process, the container management tool 172 causes the microservice 173 to store a data file recording generated processed data in the persistence destination storage 131.

Note that the orchestration tool can not only configure a cluster using the hardware resources of one edge device 1 in this manner, but also configure one or more clusters using the hardware resources of two or more different devices.

Furthermore, in the present embodiment, the edge device 1 includes a control module 175 as an application that operates on the OS 171. The control module 175 controls deployment of the microservice 173 and backup and recovery of data made persistent.

Hereinafter, the operation of the edge device 1 will be described focusing on the operation of the control module 175.

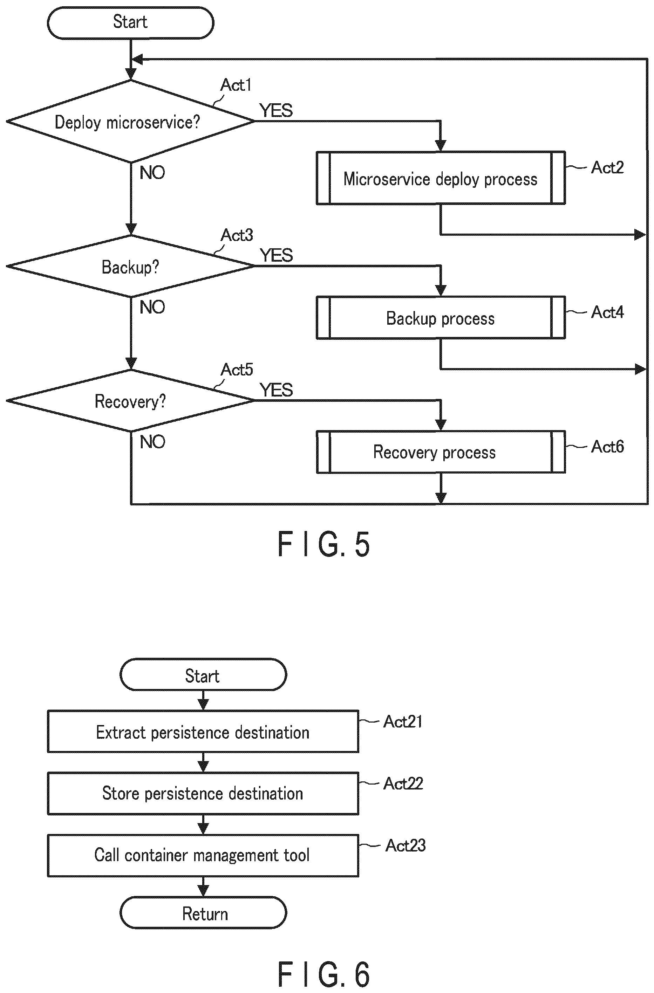

FIG. 5 is a flowchart illustrating a procedure of a main information process of the control module 175. The processor 11 of the edge device 1 functions as the control module 175 by executing a data processing program installed in the main memory 12.

First, as Act 1, the control module 175 determines whether to deploy, that is, install a microservice. The control module 175 can determine whether to deploy by, for example, checking whether there is a deployment instruction (deployment command) by an operator of the edge device 1 from the input unit 14. Alternatively, the control module 175 can determine whether to deploy by checking whether a deployment instruction has been received by the communication unit 16 from the cloud server 51 on the cloud 5 or a control terminal that is not illustrated.

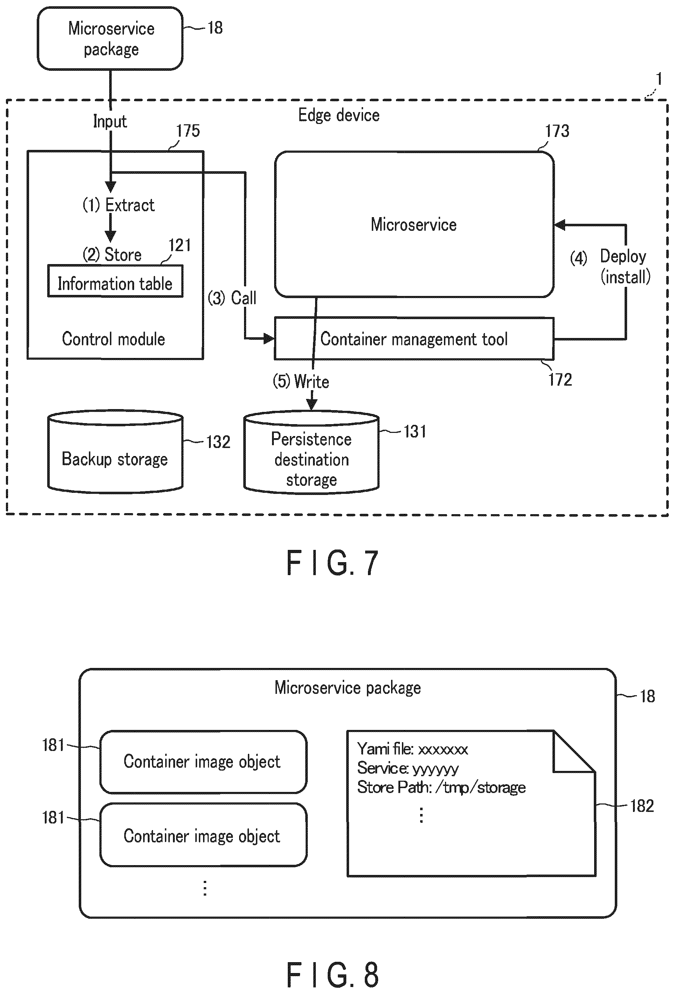

When it is determined to deploy the microservice, the control module 175 performs a microservice deployment process as Act 2. This microservice deployment process is a process of acquiring a data persistence destination for data of the microservice 173 and causing the container management tool 172 to deploy the microservice 173. Hereinafter, the microservice deployment process is described in detail with reference to FIGS. 6 to 8. Here, FIG. 6 is a flowchart illustrating a procedure of the microservice deployment process. In addition, FIG. 7 is a schematic diagram illustrating an example of a relationship between each software configuration and each storage in the edge device 1 in the microservice deployment process. FIG. 8 is a schematic diagram illustrating an example of the content of a microservice package 18.
(1) In the microservice deployment process, the control module 175 first extracts a data persistence destination for the data of the microservice as Act 21. Specifically, the control module 175 extracts, from the microservice package 18 of the microservice to be deployed, a path of the persistence destination storage 131, which is a data persistence destination for the data of the microservice. The microservice package 18 can be input from the input unit 14 together with the deployment instruction. Alternatively, the control module 175 may download the microservice package 18 from the cloud server 51 or the cloud storage 52 by the communication unit 16, based on the address on the cloud 5 indicated by the deployment instruction.

As illustrated in FIG. 8, the microservice package 18 includes a container image object 181, which is a source of each container 174 in the microservice 173, and a configuration file 182. The configuration file 182 is a text file describing the respective definitions of containers, networks, volumes, restart policies, and the like used by the microservice in YAML format. The configuration file 182 also describes a definition of a data persistence destination path. In the example of FIG. 8, a folder "/tmp/storage" in the persistence destination storage 131 is defined as the destination path (Store Path). When the microservice is to be deployed from the microservice package 18, the container management tool 172 extracts the destination path from the configuration file 182 and manages the path as a persistence destination.

In the present embodiment, in Act 21, the control module 175 extracts the data persistence destination path from the configuration file 182 of the microservice package 18, prior to the container management tool 172. In this manner, the control module 175 functions as an acquisition unit.

(2) Then, the control module 175 stores the extracted data persistence destination path as Act 22. Specifically, the control module 175 stores the extracted data persistence destination path in the microservice information table 121 as persistence destination information in association with a unique microservice ID that identifies the microservice. In this manner, the microservice information table 121 functions as a storage unit.

(3) Thereafter, the control module 175 calls the container management tool 172 as Act 23. That is, the control module 175 passes the input microservice package 18 to the container management tool 172.

(4) Note that the container management tool 172 that has received the microservice package 18 in the microservice deployment process deploys (installs) the microservice 173 from the microservice package 18. Therefore, the control module 175 functions as an installation control unit.

Then, the control module 175 terminates the microservice deployment process. When the microservice deployment process is terminated, the control module 175 returns to Act 1 described above.

(5) Then, when data generated by the microservice 173 is made persistent, the container management tool 172 writes the data in the "/tmp/storage" folder of the persistence destination storage 131.

The description returns to FIG. 5.

When it is determined not to deploy the microservice in Act 1 described above, the control module 175 determines whether to back up the data made persistent as Act 3. The control module 175 can determine whether to back up by, for example, checking whether there is a backup instruction (backup command) by the operator of the edge device 1 from the input unit 14. Alternatively, the control module 175 can determine whether to back up by checking whether a backup instruction has been received by the communication unit 16 from the cloud server 51 on the cloud 5 or a control terminal that is not illustrated. In addition, the control module 175 can determine whether to back up by checking whether a backup execution time that is determined on a daily basis has arrived. In this manner, the backup may be performed on an irregular basis or on a regular basis.

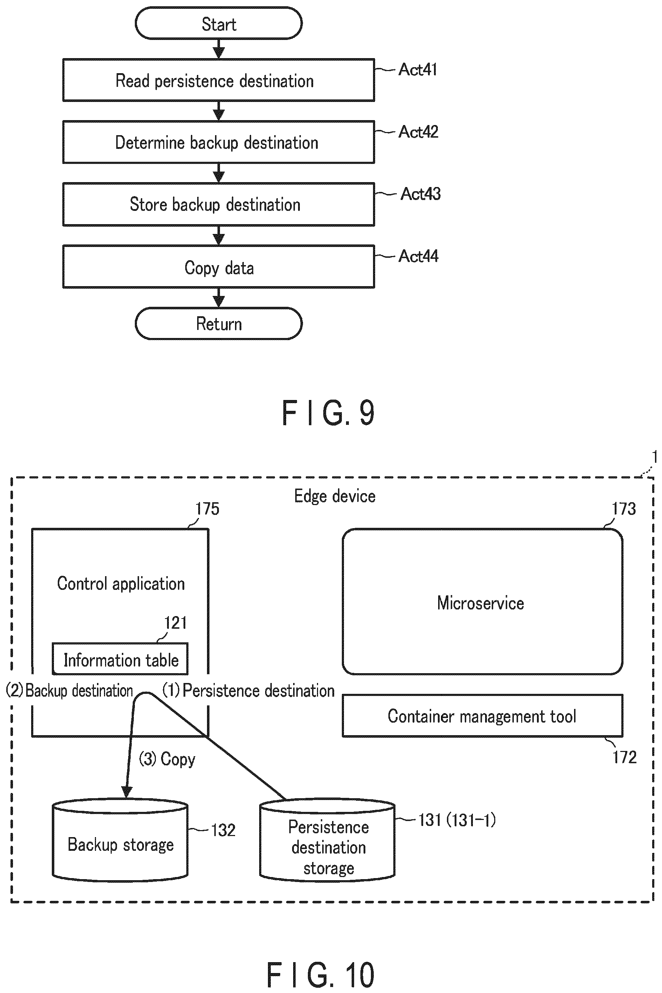

When it is determined to back up the data made persistent, the control module 175 performs a backup process as Act 4. This backup process is a process of backing up the data stored in the destination path of the persistence destination storage 131, which is the data persistence destination for the data of the microservice 173, to the backup storage 132. Hereinafter, the backup process is described in detail with reference to FIGS. 9 and 10. Here, FIG. 9 is a flowchart illustrating a procedure of the backup process. In addition, FIG. 10 is a schematic diagram illustrating an example of a relationship between each software configuration and each storage in the edge device 1 in the backup process.
(1) In the backup process, first, the control module 175 reads the data persistence destination path for data of the microservice 173, which is a backup target, as Act 41. Specifically, the control module 175 reads the data persistence destination path, which is stored as the persistence destination information in association with the microservice ID corresponding to the target microservice, from the microservice information table 121.
(2) In addition, the control module 175 determines a backup destination as Act 42. Specifically, the control module 175 determines a backup destination folder to be used in the backup storage 132 as a backup destination path. The backup destination path may correspond to the read destination path, may be generated based on the microservice ID, or may be any path that does not depend on them. Then, the control module 175 stores the determined backup destination as Act 43. Specifically, the control module 175 stores the backup destination path determined in Act 42 as backup destination information in association with the microservice ID corresponding to the target microservice in the microservice information table 121.
(3) Thereafter, the control module 175 copies the data made persistent to the backup destination as Act 44. Specifically, the control module 175 copies the data written in the destination path, which is the data persistence destination for the data of the persistence destination storage 131, to the backup destination path of the backup storage 132. Note that the persistence destination storage 131 at the time of backup is hereinafter also referred to as a pre-replacement persistence destination storage 131-1. In this manner, the control module 175 functions as a backup unit.

Then, the control module 175 terminates the backup process. When the backup process is terminated, the control module 175 returns to Act 1 described above.

The description returns to FIG. 5.

When it is determined not to back up the data made persistent in Act 3 described above, the control module 175 determines whether to recover backup data as Act 5. The control module 175 can determine whether to recover by, for example, checking whether there is a recovery instruction (recovery command) by the operator of the edge device 1 from the input unit 14. The recovery instruction is input by the operator when, for example, the hardware of the persistence destination storage 131 is replaced with new hardware due to a failure of the persistence destination storage 131 or the like. Alternatively, the control module 175 can determine whether to recover by checking whether a recovery instruction has been received by the communication unit 16 from the cloud server 51 on the cloud 5 or a control terminal that is not illustrated.

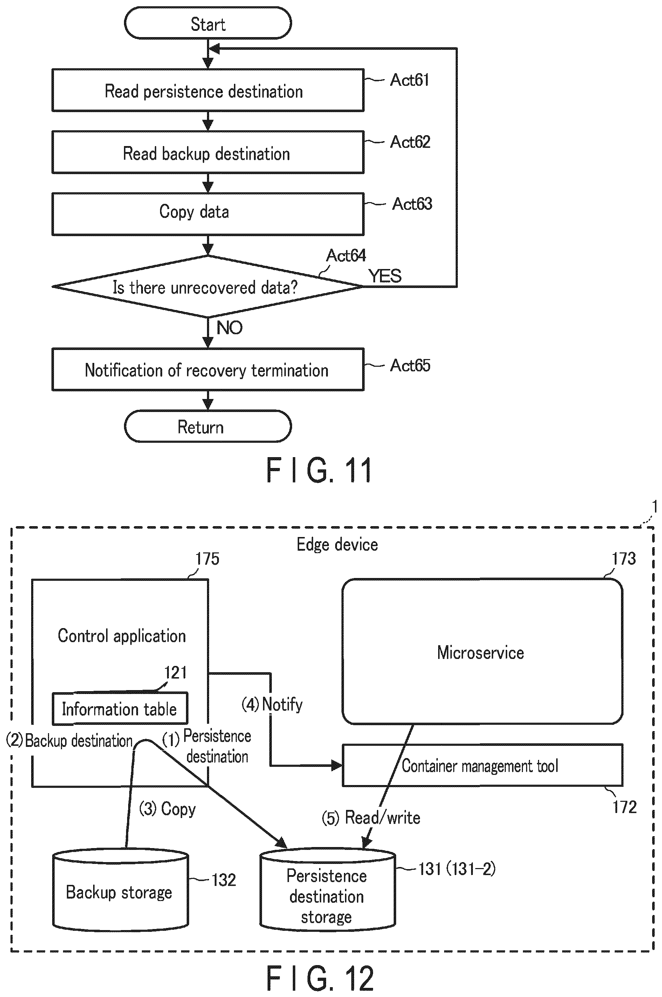

When it is determined to recover the backup data, the control module 175 performs a recovery process as Act 6. This recovery process is a process of recovering the data backed up in the backup storage 132 to the data persistence destination for data of the microservice 173 in the persistence destination storage 131. Hereinafter, the backup process is described in detail with reference to FIGS. 11 and 12. Here, FIG. 11 is a flowchart illustrating a procedure of the recovery process in Act 6. In addition, FIG. 12 is a schematic diagram illustrating an example of a relationship between each software configuration and each storage in the edge device 1 in the recovery process.

In the recovery process, first, the control module 175 reads a data persistence destination path for data of one microservice 173, which is a recovery target, as Act 61. Specifically, the control module 175 reads, from the microservice information table 121, the data persistence destination path stored as the persistence destination information in association with one microservice ID.

(2) Furthermore, the control module 175 reads the backup destination for the data of the microservice 173, which is the recovery target, as Act 62. Specifically, the control module 175 reads, from the microservice information table 121, the backup destination path of the backup storage 132 stored as the backup destination information in association with the microservice ID for which the data persistence destination path has been read.

(3) Then, the control module 175 copies the backup data to the persistence destination as Act 63. Specifically, the control module 175 copies the data backed up in the backup destination path to the path of the persistence destination storage 131 indicated by the data persistence destination path. The persistence destination storage 131 to which the data is copied in this case is not the pre-replacement persistence destination storage 131-1, but new replaced hardware. Hereinafter, the replaced persistence destination storage 131 is also referred to as a post-replacement persistence destination storage 131-2. In this manner, the control module 175 functions as a recovery unit.

Thereafter, the control module 175 determines whether there is unrecovered data as Act 64. Specifically, the control module 175 determines whether there is a microservice ID that has not yet been used as a recovery target among the microservice IDs stored in the microservice information table 121. When it is determined that there is unrecovered data, the control module 175 returns to Act 61 described above.

(4) When it is determined that there is no unrecovered data in Act 64, the control module 175 notifies the container management tool 172 of the recovery termination as Act 65.

Then, the control module 175 terminates the recovery process. When the recovery process is terminated, the control module 175 returns to Act 1 described above.

(5) Note that the container management tool 172 that has received the recovery notification by the recovery process starts the microservice 173. Then, when the microservice 173 needs data generated in the past, the container management tool 172 can read the data from the post-replacement persistence destination storage 131-2, and when the microservice 173 makes generated data persistent, the container management tool 172 can write the data to the post-replacement persistence destination storage 131-2.

As described above in detail, according to the present embodiment, when a microservice is to be deployed (installed), the control module 175 implemented by a control application that controls a data processing apparatus acquires a destination path that is storage destination information indicating a storage destination in the persistence destination storage 131 used to store data generated by the microservice, stores the destination path in the microservice information table 121, and causes the container management tool 172 to deploy the microservice. Therefore, the control module 175 can grasp the data persistence destination of the data generated by the microservice.

Then, according to the present embodiment, the control module 175 backs up the data generated by the microservice 173 stored in the persistence destination storage 131 to the backup storage 132, which is hardware physically different from the persistence destination storage 131, based on the data persistence destination path for the data of the microservice 173 stored in the microservice information table 121, and stores a backup destination path of the backup storage 132 in the microservice information table 121. Therefore, the data generated by the microservice 173 can be backed up.

Thereafter, when the pre-replacement persistence destination storage 131-1, which is the persistence destination storage 131 storing the data backed up to the backup storage 132, fails and is replaced with the post-replacement persistence destination storage 131-2, which is the new persistence destination storage 131, according to the present embodiment, the control module 175 recovers the data backed up in the backup storage 132 to the post-replacement persistence destination storage 131-2 based on the backup destination path of the backup storage 132 stored in the microservice information table 121 and the data persistence destination path for the data in the pre-replacement persistence destination storage 131-1. Therefore, the data generated by the microservice 173 that has been backed up can be restored in the post-exchange persistence destination storage 131-2 and continuously used by the microservice 173.

Note that, according to the present embodiment, the control module 175 extracts the data persistence destination path for data of the microservice from the microservice package 18, which is an installation source file of the microservice. Therefore, the control module 175 can easily acquire the destination path.

In addition, the data processing apparatus according to the present embodiment includes the persistence destination storage 131 and is the edge device 1 that communicates with the cloud **5.** Therefore, even if the storage in the edge device 1 is designated as the data persistence destination for the data of the microservice, the control module 175 can grasp the data persistence destination of the data generated by the microservice, and can back up and recover the data. Therefore, in the system including the container 174 operating on the on-premises edge device 1, the backup process of the edge device 1 enables data recovery even if the persistence destination storage 131, which is the storage of the destination for persistence, is damaged.

Although an embodiment has been described above, the present invention is not limited thereto.

For example, the backup destination of the data made persistent may be an external storage instead of the backup storage 132 in the edge device 1. For example, the backup destination may be the same on-premises data storage 3 as the edge device 1, or may be the cloud storage 52 on the cloud 5 with which the edge device 1 communicates.

In addition, the procedures of the flowcharts described in the embodiment and the content thereof are examples. If a similar result can be obtained, the procedures and content can be appropriately changed. For example, the order of Act 41, Act 42, and Act 43 may be reversed, or may be performed in parallel. As described above, as long as there is no inconsistency with preceding or subsequent processes, the order of processes may be changed, or a plurality of processes may be performed in parallel.

The data processing apparatus described above is as follows.
(1) A data processing apparatus including:
   an acquisition unit configured to acquire, when a microservice is to be installed, storage destination information indicating a storage destination in a first storage device, the storage destination being used to store data generated by the microservice;
   a storage unit configured to store the storage destination information acquired by the acquisition unit; and
   an installation control unit configured to install the microservice for which the storage destination information has been acquired.
(2) The data processing apparatus according to (1), further including:
   a backup unit configured to back up, based on the storage destination information stored in the storage unit, the data generated by the microservice stored in the first storage device to a second storage device physically different from the first storage device.
(3) The data processing apparatus according to (2), further including:
   a recovery unit configured to recover, based on the storage destination information stored in the storage unit, the data stored in the second storage device to the first storage device.
(4) The data processing apparatus according to any one of (1) to (3), wherein
   the acquisition unit is configured to extract the storage destination information from an installation source file of the microservice.
(5) The data processing apparatus according to any one of (1) to (4), wherein
   the data processing apparatus further includes the first storage device, and is an edge device that communicates with a cloud.
(6) A program for causing a computer that operates a microservice to achieve,
   when the microservice is to be installed:
   a function of acquiring storage destination information indicating a storage destination in a first storage device, the storage destination being used to store data generated by the microservice;
   a function of storing the acquired storage destination information in a memory; and
   a function of installing the microservice.
(7) A computer-readable storage medium storing a program for causing a computer that operates a microservice to achieve,
   when the microservice is to be installed:
   a function of acquiring storage destination information indicating a storage destination in a first storage device, the storage destination being used to store data generated by a microservice;
   a function of storing the acquired storage destination information in a memory; and
   a function of installing the microservice.
(8) A data processing apparatus including: a memory in which a microservice is to be installed; a processor configured to operate the microservice installed in the memory; and a first storage device used to store data generated by the microservice, wherein
   the processor is further configured,
   when the microservice is to be installed in the memory:
   to acquire storage destination information indicating a storage destination in the first storage device;
   to store the acquired storage destination information in the memory; and
   to install the microservice in the memory.

The program according to the present embodiment may be transferred in a state of being stored in an electronic device, or may be transferred in a state of not being stored in an electronic device. In the latter case, the program may be transferred via a network or may be transferred in a state of being stored in a storage medium. The storage medium is a non-transitory tangible medium. The storage medium is a computer-readable medium. The storage medium may be any medium that can store a program such as a CD-ROM or a memory card and can be read by a computer, and its form is not limited.

Note that the embodiments are presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention and are included in the invention described in the claims and the equivalent scope thereof.

## Claims

1. A data processing apparatus comprising:
an acquisition unit configured to acquire, when a microservice is to be installed, storage destination information indicating a storage destination in a first storage device, the storage destination being used to store data generated by the microservice;
a storage unit configured to store the storage destination information acquired by the acquisition unit; and
an installation control unit configured to install the microservice for which the storage destination information has been acquired.

2. The data processing apparatus according to claim 1, further comprising:
a backup unit configured to back up, based on the storage destination information stored in the storage unit, the data generated by the microservice stored in the first storage device to a second storage device physically different from the first storage device.

3. The data processing apparatus according to claim 2, further comprising:
a recovery unit configured to recover, based on the storage destination information stored in the storage unit, the data stored in the second storage device to the first storage device.

4. The data processing apparatus according to claim 1, wherein
the acquisition unit is configured to extract the storage destination information from an installation source file of the microservice.

5. The data processing apparatus according to any one of claims 1 to 4, wherein
the data processing apparatus further comprises the first storage device, and is an edge device that communicates with a cloud.

6. A program for causing a computer that operates a microservice to realize,
when the microservice is to be installed:
a function of acquiring storage destination information indicating a storage destination in a first storage device, the storage destination being used to store data generated by the microservice;
a function of storing the acquired storage destination information in a memory; and
a function of installing the microservice.

7. A computer-readable storage medium storing a program for causing a computer that operates a microservice to realize,
when the microservice is to be installed:
a function of acquiring storage destination information indicating a storage destination in a first storage device, the storage destination being used to store data generated by the microservice;
a function of storing the acquired storage destination information in a memory; and
a function of installing the microservice.
